# EUROPEAN PATENT APPLICATION

(11) **EP 1 811 774 A2**
(43) Date of publication of application: **25.07.2007**
(21) Application number: 07001066.5
(22) Date of filing: 18.01.2007
(51) Int. Cl.: H04N 5/50, H04N 5/445

(54) **Broadcast signal reception apparatus attaining channel selection function**

(30) Priority: 20.01.2006 JP 2006012222
(71) Applicant: Funai Electric Co., Ltd., Daito-shi, Osaka 574-0031 (JP)
(72) Inventor: Yamada, Koujirou, Daito-shi Osaka 574-0013 (JP); Miyabe, Seiji, Daito-shi Osaka 574-0013 (JP); Nishigaki, Hiroshi, Daito-shi Osaka 574-0013 (JP); Ohhashi, Naruyuki, Daito-shi Osaka 574-0013 (JP); Suzu, Hirokazu, Daito-shi Osaka 574-0013 (JP); Yamamoto, Manabu, Daito-shi Osaka 574-0013 (JP)
(74) Representative: Grünecker, Kinkeldey, Stockmair & Schwanhäusser Anwaltssozietät

(57) **Abstract**

A selection operation of a designated channel for a broadcast signal received via an antenna is performed, so that the broadcast signal of the designated channel is detected and the detected broadcast signal is output to a monitor (90) via a video IC (30) and the like. When the power of a microcomputer (60) is turned on (power supply is started), the microcomputer (60) causes a tuner (10) to perform a channel-selection operation for the channel that has been selected at the time of most recent turn-off of the power (power supply stop). As a result of the channel-selection operation, if the tuner (10) cannot detect the broadcast signal of the channel, the microcomputer (60) displays an image of that channel (an image where an video image is not shown) on the monitor (90) and thereafter displays an image for notifying a user of a measure to be taken through an OSD circuit (140).

## Description

### BACKGROUND OF THE INVENTION

### Field of the Invention

The present invention relates to a broadcast signal reception apparatus such as a TV (television) receiver or a DVD (Digital Versatile Disk) recorder, and more particularly to a broadcast signal reception apparatus capable of instructing a user on a measure to be taken when a video image based on a broadcast signal in a reception channel is not displayed at the time of turn-on of power.

### Description of the Background Art

Conventionally, when a user purchases a broadcast signal reception apparatus such as a TV receiver, the user initially connects an antenna terminal to an antenna plug and inserts a plug of a power cord into an outlet, so as to set a state where power can be supplied from utility power source. Thereafter, the user operates a power switch and turns the power on. Thus, supply of power at an operable level to each unit in the TV receiver is started. Thereafter, when the user performs an operation to select a channel auto preset mode, channel preset processing is performed in the TV receiver. Consequently, information on solely a channel where a broadcast signal is present is stored in memory. The channel preset processing thus ends. Thereafter, for example, if the user operates a channel up/down key of a remote controller and successively selects a channel, a channel-selection operation is performed only when a channel where a broadcast signal is present is selected, and a video image based on the broadcast signal in that channel is displayed. On the other hand, if a channel where a broadcast signal is absent is selected, the channel-selection operation is skipped. Therefore, the video image based on the broadcast signal in that channel is not displayed.

Here, the "channel where a broadcast signal is absent/present" refers to a channel in which a corresponding broadcast signal can/cannot be received. The phrase "a broadcast signal corresponding to the channel cannot be received" refers to such a state that a broadcast signal corresponding to the channel is not transmitted from a broadcast station, a state that the TV receiver is located in an area the broadcast signal cannot reach, or the like.

In addition, turn-on of the power refers to display of a video image on a screen as a result of start of power supply at a level sufficient for operation to each unit in the TV receiver, and turn-off of the power refers to turn-off of the video image on the screen (or non-display of the video image) as a result of stop of power supply at a level sufficient for operation to each unit in the TV receiver.

Even if the channel is auto preset and information stored in the memory on the channel where the broadcast signal is present is constantly updated to latest information as above, the following inconvenience is caused in daily use. For example, when the user turns on the power of the TV receiver late at night or early in the morning and if a broadcast station of the channel, that has been selected immediately before most recent turn-off of the power, does not broadcast at such a time of day, the video image is not displayed on a monitor screen despite that the channel is capable of reception.

In addition, recently, more and more households keep a pet in a room. When a pet runs around the room, it also happens that the pet unplugs the antenna terminal of an apparatus. When the antenna terminal of the TV receiver is unplugged, naturally the video image is not displayed on the monitor screen. Therefore, the user without knowing that the antenna terminal is unplugged does not understand the reason why the video image is not displayed, and is confused.

The user tends to misunderstand such a situation as failure of the TV receiver, because the video image was displayed until turn-off of the power but no video image is displayed at the time of next turn-on of the power: Particularly in the United States, there are many cases of such misunderstanding, and due to such misunderstanding, many users contact a manufacturer of the TV receiver or return the TV receiver to a distributor, despite that the apparatus is not out of order.

In view of such backgrounds, a function to allow adjustment by a user in the case of occurrence of malfunction has been proposed.

According to Japanese Patent Laying-Open No. 07-284036, a menu of adjustment items for various types of adjustment of the TV receiver is displayed on the screen in a hierarchical structure. More specifically, a plurality of layers including a currently selected layer are successively arranged and displayed simultaneously. Regardless of the contents displayed in layers, switch between layers can be made by operating a unified up/down/left/right cursor key. In addition, as the layers including the selected layer are successively displayed, operation history is clearly seen and operability is improved.

In addition, according to Japanese Patent Laying-Open No. 08-214227, for checking various functions in operating a video camera by using an operation menu, simulation of an actual video image is shown in a small screen.

Moreover, according to Japanese Patent Laying-Open No. 09-130695, as a result of user's operation of a button on a remote controller, for example, a corresponding button on a remote controller image displayed on a screen flashes or a color of the button is varied. Simultaneously, texts describing the function of that button are displayed on the screen.

In the TV receiver or the like, a function is provided, to display an image for providing the user with information on hints on a measure to be taken (hereinafter, referred to as HELPFUL HINTS image) if inconvenience such as failure in reception of a signal in the currently selected channel immediately after turn-on of the power is caused. If the HELPFUL HINTS image is abruptly displayed immediately after turn-on of the power, however, the user does not understand the reason why such an image is displayed and the user is confused on the contrary.

The three patent documents mentioned above are silent about the function to present the HELPFUL HINTS image, or do not notify the user of the reason why the HELPFUL HINTS image is presented.

### SUMMARY OF THE INVENTION

An object of the present invention is to provide a broadcast signal reception apparatus capable of preventing confusion of the user as much as possible when the user is notified of a measure to be taken when a video image in a reception channel is not displayed at the time of turn-on of the power.

In order to achieve the above-described object, a broadcast signal reception apparatus according to one aspect of the present invention includes: a display unit displaying an image based on a supplied signal on a prepared display; a channel-selection operation unit performing a channel-selection operation of a designated channel for a received broadcast signal and outputting a broadcast signal corresponding to the designated channel to the display unit; a channel-selection control unit controlling, when the power is turned on, the channel-selection operation unit such that the channel-selection operation unit selects a channel that has been selected at the time of most recent turn-off of power as the designated channel; and a display control unit. When the broadcast signal of the designated channel is absent in an output from the channel-selection operation unit controlled by the channel-selection control unit, the display control unit displays an image based on the output from the channel-selection operation unit on the display as a result of operation by the display unit and thereafter displays an image for instructing a measure on the display.

Preferably, in order to provide hints on the measure, the image of the measure includes at least one of an instruction to refer to an instruction manual of the broadcast signal reception apparatus, an instruction to check connection of an antenna terminal, and an instruction to perform auto preset.

Preferably, the broadcast signal reception apparatus further includes a channel re-selection control unit controlling the channel-selection operation unit such that the channel-selection operation unit selects a channel again, when an operation in accordance with the measure displayed in the image of the measure is performed.

Preferably, if the broadcast signal of the designated channel is present in the output from the channel-selection operation unit as a result of channel-selection operation by the channel-selection operation unit controlled by the channel re-selection operation unit, the display control unit turns off display of the image of the measure.

Preferably, the display control unit determines presence/absence of the broadcast signal of the designated channel based on whether a synchronizing signal of the broadcast signal is detected in the output from the channel-selection operation unit.

Preferably, the display control unit displays the measure in a language of a designated type.

Preferably, when the image of the measure is displayed as a result of operation by the display control unit, the measure is output with voice/sound.

Preferably, the measure is output using voice/sound in a language of a designated type.

Preferably, if a signal based on the image data read from the storage unit storing the image data is provided to the display unit, the image of the measure is not displayed.

Preferably, the broadcast signal reception apparatus further includes an external input portion for input of externally provided image data, and if a signal based on the image data input through the external input portion is provided to the display unit, the image of the measure is not displayed.

According to the present invention, if the video image is not displayed on the display because of absence of the broadcast signal in the reception channel at the time of turn-on of the power, an image where no video image is shown is displayed and thereafter an image for presenting a measure to the user is displayed on the display. Thus, after the user recognizes that the video image is not displayed on the screen, the user recognizes the measure. Therefore, the user can know the reason why the image of the measure is displayed (the image of the measure is displayed because the video image is not displayed), and confusion of the user can be prevented as compared with the case that the image of the measure is abruptly displayed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Figs. 1A and 1B illustrate a configuration of a TV receiver according to one embodiment of a broadcast signal reception apparatus of the present invention.
Fig. 2 shows an AFT voltage characteristic.
Fig. 3 is a conceptual diagram showing an example of channel position data storage.
Fig. 4 shows an exemplary display image of a measure to be taken.
Fig. 5 is a processing flowchart for displaying a measure to be taken when a broadcast signal of a selected channel is absent when power is turned on.
Fig. 6 shows an exemplary display image for selecting a language.

### DESCRIPTION OF THE PREFERRED EMBODIMENTS

An embodiment of the present invention will be described hereinafter with reference to the drawings.

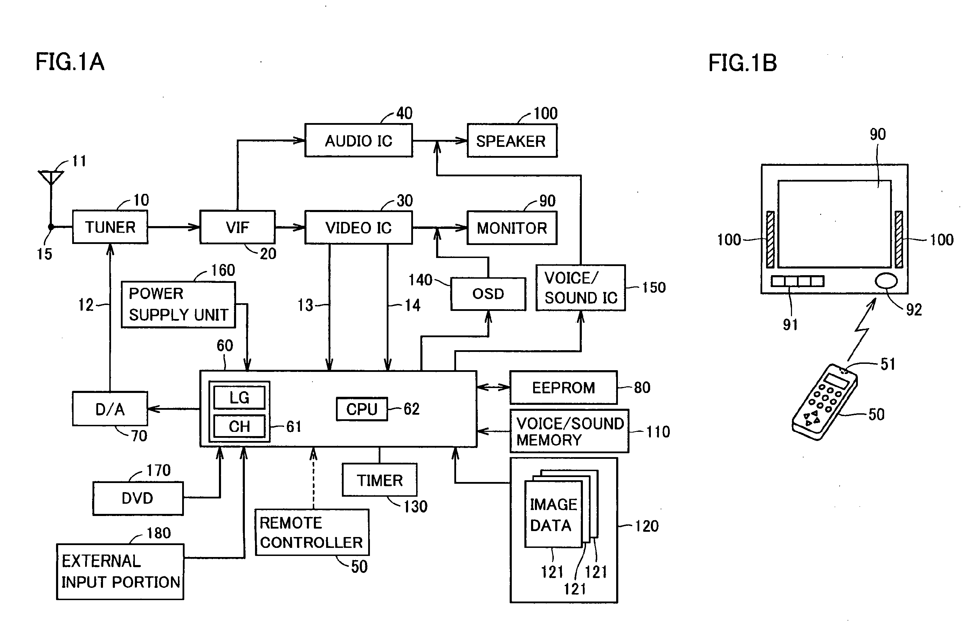

Figs. 1A and 1B illustrate a configuration of a TV receiver according to one embodiment of a broadcast signal reception apparatus of the present invention. Fig. 1A is a block diagram showing an electrical configuration and Fig. 1B shows appearance.

Referring to Figs. 1A and 1B, an antenna 11 provided outside, a monitor 90 serving as a display portion, and a speaker 100 are connected to configure a TV receiver. Antenna 11 receives a broadcast signal transmitted from a broadcast station and outputs the broadcast signal to the TV receiver. Monitor 90 is configured with liquid crystals and the like. Monitor 90 attains a function as the display outputting an image for displaying a video image in accordance with the supplied signal.

The TV receiver includes an antenna terminal 15, a tuner 10, a VIF (Video Intermediate Frequency) circuit 20, a video IC (Integrated Circuit) 30, an audio IC 40, a microcomputer 60, a D/A (Digital/Analog) converter 70, an EEPROM (Electrically Erasable and Programmable Read Only Memory) 80, a voice/sound memory 110 storing in advance voice/sound data, an image data memory 120, a timer 130 performing a time-counting operation and outputting time data to microcomputer 60, an OSD (On Screen Display) circuit 140, a voice/sound IC 150, a power supply unit 160, a DVD drive unit 170, and an external input portion 180.

Power supply unit 160 supplies each unit in the TV receiver with electric power from a not-shown utility power source. DVD drive unit 170 attains a reproduction function of information in a DVD (not shown) storing at least image data, and outputs a signal based on the image data reproduced from the DVD to microcomputer 60. External input portion 180 attains a function to receive input of image data and the like from an external apparatus and to output the signal based on the image data to microcomputer 60.

Antenna terminal 15 attains a function as a reception unit, and receives input of the broadcast signal output from antenna 11 and outputs the broadcast signal to tuner 10.

Tuner 10 attains a function to receive input of the broadcast signal output from antenna terminal 15 and performs a channel-selection operation for a designated channel.

Video IC 30 attains a function as a display unit for displaying an image on monitor 90.

For remote control of the TV receiver, the user operates a remote controller 50 on hand so as to transmit to the TV receiver, an instruction signal for controlling an operation of the TV receiver through radio wave (such as infrared ray).

Microcomputer 60 includes a CPU (central processing unit) 62 and a memory 61. CPU 62 attains a function to control an operation of microcomputer 60 itself and other units.

Each time remote controller 50 is operated for channel selection, CPU 62 stores in memory 61, data CH indicating the selected channel based on the instruction signal received from remote controller 50. In addition, CPU 62 stores in memory 61, data LG indicating a type of language, based on the instruction signal received from remote controller 50. After the power is turned on, data CH stored in memory 61 indicates information specifying a currently selected channel.

Data LG indicates a type of language for showing a message in the HELPFUL HINTS image, which will be described later, to be displayed on monitor 90.

Memory 61 is such a memory that data stored therein is not erased even though the power of the TV receiver in Fig. 1 is turned off. Therefore, data CH indicates information specifying the channel that has been selected at the time of most recent turn-off of the power, during a period in which no electric power is supplied to each unit as a result of turn-off of the power of the TV receiver.

It is noted that, even when the power of the TV receiver is turned off, namely, when each unit is not supplied with power from power supply unit 160, microcomputer 60 is in an operable state, because it is supplied with power from a back-up power supply (not shown).

Microcomputer 60 attains a function as a channel-selection control unit that controls tuner 10 to perform channel selection, a function as a display control unit that controls image display on monitor 90 by means of video IC 30, and a function as a channel re-selection control unit that causes tuner 10 to perform a channel-selection operation again based on the instruction signal from remote controller 50, as a result of operation by CPU 62 to read a prescribed program from memory 61 and execute a command in the read program.

Tuner 10 receives input of the broadcast signal received through antenna 11 and antenna terminal 15, detects (extracts) only the signal corresponding to a frequency of a desired channel from the input broadcast signal, amplifies a high-frequency component in the detected signal, and thereafter outputs the signal. Tuner 10 adopts what is called a voltage synthesizer system. Tuner 10 tunes to a desired channel frequency based on an input tuning voltage signal 12 and a band switch voltage signal, so that tuner 10 detects only the signal corresponding to the frequency of the desired channel. Here, for the sake of brevity in description, it is assumed that tuner 10 operates based on tuning voltage signal 12, without mentioning the band switch voltage signal. In the present embodiment, the TV receiver is configured to receive TV broadcast wave, however, the TV receiver may be applied to another form of broadcast such as cable TV broadcast and modification as appropriate may be made.

The signal output from tuner 10 is amplified in VIF circuit 20 and output to video IC 30 as a video image intermediate frequency signal. In addition, a voice/sound intermediate frequency signal is present as a signal subjected to FM (Frequency Modulation) and having a frequency lower by 4.5MHz than the frequency of the video image intermediate frequency signal of 58.75MHz. A not-shown diode demodulates the amplitude of the signal amplified by VIF circuit 20, so that a second voice/sound intermediate frequency signal at 4.5MHz is detected and output to audio IC 40. Audio IC 40 attains a demodulation function for FM, demodulates the input second voice/sound intermediate frequency signal, amplifies as appropriate the demodulated voice/sound signal, and outputs the amplified voice/sound signal to speaker 100. Therefore, speaker 100 outputs voice/sound in accordance with the broadcast signal corresponding to the desired channel.

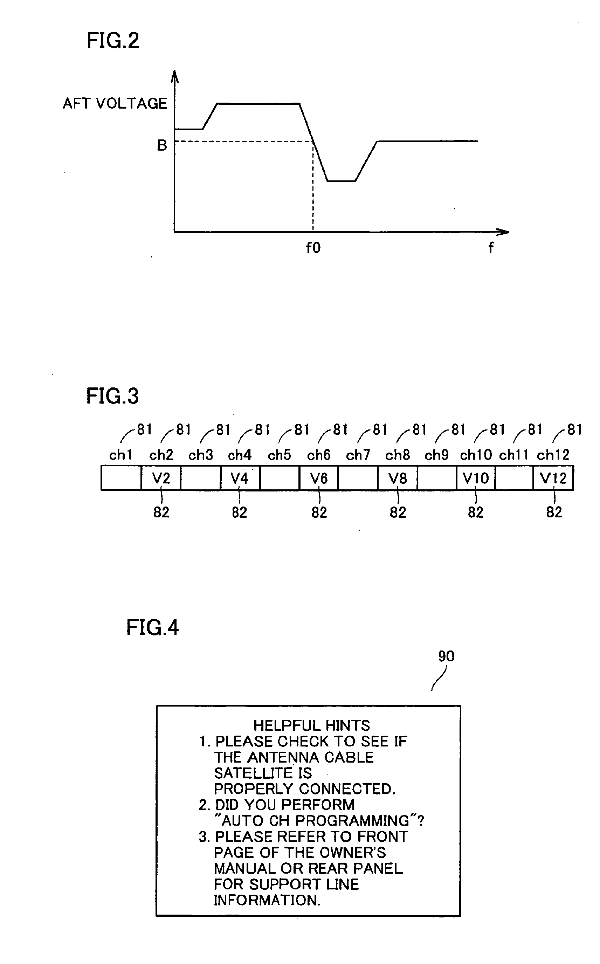

Meanwhile, video IC 30 demodulates the signal that has been subjected to video image intermediate frequency amplification input as above, and subjects the demodulated signal to various types of signal processing such as sync separation, color reproduction, and the like. The signal that has been subjected to such signal processing is output to monitor 90 as a video signal. Video IC 30 includes a not-shown AFT (Automatic Frequency Tuning) circuit. The AFT circuit generates an AFT (error) voltage in accordance with deviation between a reference frequency and a frequency of a video image carrier detected from the input signal that has been subjected to video image intermediate frequency amplification. The AFT voltage will be described with reference to Fig. 2. In the graph shown in Fig. 2, the ordinate represents a voltage and the abscissa represents a frequency f. As shown in Fig. 2, the AFT voltage has a voltage characteristic in an inverted-S shape around a normalized tuning point f0. In other words, when the actual frequency of the video image carrier matches with the reference frequency, the AFT voltage attains to a B voltage. If there is slight deviation between the actual frequency of the video image carrier and the reference frequency, the voltage characteristic exhibits a tendency of monotone increase or monotone decrease, depending on a direction of deviation. If there is great deviation between the actual frequency of the video image carrier and the reference frequency, a saturated state above and below the voltage B is attained and the voltage characteristic is constant. Therefore, by detecting the actual AFT voltage and comparing the same with the B voltage, degree and direction of deviation are found.

In addition, video IC 30 receives input of image data from DVD drive unit 170 and external input portion 180 supplied through microcomputer 60, subjects the image data to decoding processing, D/A (digital/analog) conversion and the like, and thereafter outputs the data to monitor 90 as the image signal.

In the TV receiver according to the present embodiment, various operations can be performed through remote controller 50. Though not shown, on an operation panel of remote controller 50, a power button, a channel button, a channel up/down button, a volume button, an auto preset button, a cursor key for moving a cursor displayed on monitor 90, and the like are provided. When the user presses the operation button or the key, a corresponding infrared-ray remote controller signal (instruction signal) is emitted from an emission portion 51. Then, an infrared-ray remote controller signal reception portion 92 on the TV receiver side receives the infrared-ray remote controller signal. The received signal (instruction signal) is provided to CPU 62 of microcomputer 60. CPU 62 performs processing instructed by the provided instruction signal.

For example, in instructing the reception channel of tuner 10, the user presses either the channel button for designating a desired channel or the channel up/down button. Then, the instruction signal (infrared-ray remote controller signal) in accordance with the operated button is transmitted and received by the TV receiver. Microcomputer 60 outputs tuning voltage data digitally encoded for reception of the broadcast signal of the instructed channel, based on the received instruction signal. The tuning voltage data is converted to analog tuning voltage signal 12 in D/A converter 70. Thereafter, tuning voltage signal 12 is provided to tuner 10. Here, the band switch voltage signal is simultaneously supplied.

Though remote controller 50 is used to provide the user's instruction signal to the TV receiver, the present invention is not limited thereto. For example, the user may operate an operation portion 91 consisting of operation buttons provided on a front panel or the like of the TV receiver, instead of remote controller 50, and provide the instruction signal to microcomputer 60.

Tuner 10 according to the present embodiment adopts the voltage synthesizer system. Therefore, the tuning voltage data should be set (stored) in advance. Namely, microcomputer 60 performs auto preset processing in advance. By performing the auto preset processing, desired tuning voltage data, for example, in correspondence with each of twelve channel numbers from "1" to "12" is stored in EEPROM 80. More specifically, data 81 indicating identification information (such as the numbers from "1" to "12") of the channel and tuning voltage data 82 indicating the tuning voltage level in correspondence with data 81 of each channel are stored in EEPROM 80, as shown in Fig. 3. In Fig. 3, in data 81 of the channel for which corresponding tuning voltage data 82 is not set in the auto preset processing, "empty" data (blank in Fig. 3) is stored as tuning voltage data 82. It is noted that the number of channels is not limited to 12.

When the signal instructing reception of the broadcast signal of the desired channel is transmitted from remote controller 50, CPU 62 of microcomputer 60 receives input of the instruction signal and searches EEPROM 80 based on the channel number indicated by the input instruction signal. As a result of search, tuning voltage data 82 corresponding to data 81 indicating the number matching with the instructed channel number is read from EEPROM 80, and read tuning voltage data 82 is output to D/A converter 70.

In actually allocating tuning voltage data 82, microcomputer 60 performs prescribed auto preset processing and stores tuning voltage data 82. Here, the signal received via antenna 11, antenna terminal 15, tuner 10, and VIF 20 is provided to video IC 30. Video IC 30 separates synchronizing signal 13 from the input reception signal and outputs the signal to microcomputer 60, and outputs AFT voltage signal 14 indicating the AFT voltage generated based on the reception signal as described above to microcomputer 60.

Microcomputer 60 receives input of synchronizing signal 13 and AFT voltage signal 14 provided from video IC 30, and while substantially continuously varying the level (frequency) of the tuning voltage provided to tuner 10 for the channel-selection operation based on the input signal, microcomputer 60 detects synchronizing signal 13 and locates such a tuning voltage level (tuning point) as minimizing the AFT voltage level indicated by AFT voltage signal 14. Then, microcomputer 60 stores the located tuning voltage level as tuning voltage data 82, in correspondence with data 81 of the prescribed channel number of EEPROM 80.

Here, for channel numbers "2, 4, 6, 8, 10, 12", namely, for each data 81 indicating "ch2, ch4, ch6, ch8, ch10, ch12", tuning voltage data 82 indicating located, different tuning points is stored.

In the configuration described above, according to the present embodiment, microcomputer 60 performs the selection operation of the channel that has been selected at the time of most recent turn-off of the power, when the power is turned on in response to the instruction signal instructing turn-on of the power through pressing of the power button on remote controller 50. Consequently, when the broadcast signal is absent in the selected channel, that is, when the broadcast signal corresponding to the frequency of the channel selected in the channel-selection operation by tuner 10 is absent in the broadcast signal received via antenna 11 and antenna terminal 15, the HELPFUL HINTS image is displayed on monitor 90 to the user. By displaying the HELPFUL HINTS image, the user can be advised (notified) of a measure for addressing failure in reception of the broadcast signal corresponding to the channel.

The data for the HELPFUL HINTS image is stored in advance in image data memory 120. CPU 62 reads the image data from image data memory 120, and outputs the read image data to OSD circuit 140. OSD circuit 140 generates an image signal based on the provided image data and outputs the image signal to an input stage of monitor 90. Thus, monitor 90 superimposes the image based on the image data output from OSD circuit 140 on the video image based on the broadcast signal output from video IC 30, and displays the superimposed image. Consequently, even if the channel where the broadcast signal is absent is selected and the video image is not displayed, the HELPFUL HINTS image can be displayed on monitor 90.

Here, language data (such as English, Chinese, Japanese, and the like) and corresponding image data 121 for the HELPFUL HINTS image represented in that language are stored in image data memory 120. More specifically, CPU 62 reads data LG from memory 61, and searches image data memory 120 based on read data LG. As a result of search, image data 121 corresponding to the type of language indicated by data LG is read. Read image data 121 is provided to OSD circuit 140. For example, if data LG indicates "English", the HELPFUL HINTS image as shown in Fig. 4 based on image data 121 represented in English is displayed on monitor 90.

The value of data LG can be set to a desired value through user's operation of remote controller 50. When the user operates remote controller 50 and designates a desired type of language, the instruction signal instructing change to the designated type of language is transmitted to microcomputer 60. CPU 62 of microcomputer 60 updates data LG in memory 61 based on the received instruction signal, such that the type of language indicated by the reception signal is indicated. Therefore, the user can switch between languages in which the message in the HELPFUL HINTS image is represented, such that a language of a type the user is good at is set.

In the HELPFUL HINTS image in Fig. 4, "a message urging the user to check whether the antenna cable is properly connected, "a message inquiring whether the user performed auto preset," and "a message urging the user to refer to the instruction manual" are displayed, so as to urge the user to take these three measures. It is noted that the measures to be presented are not limited as such.

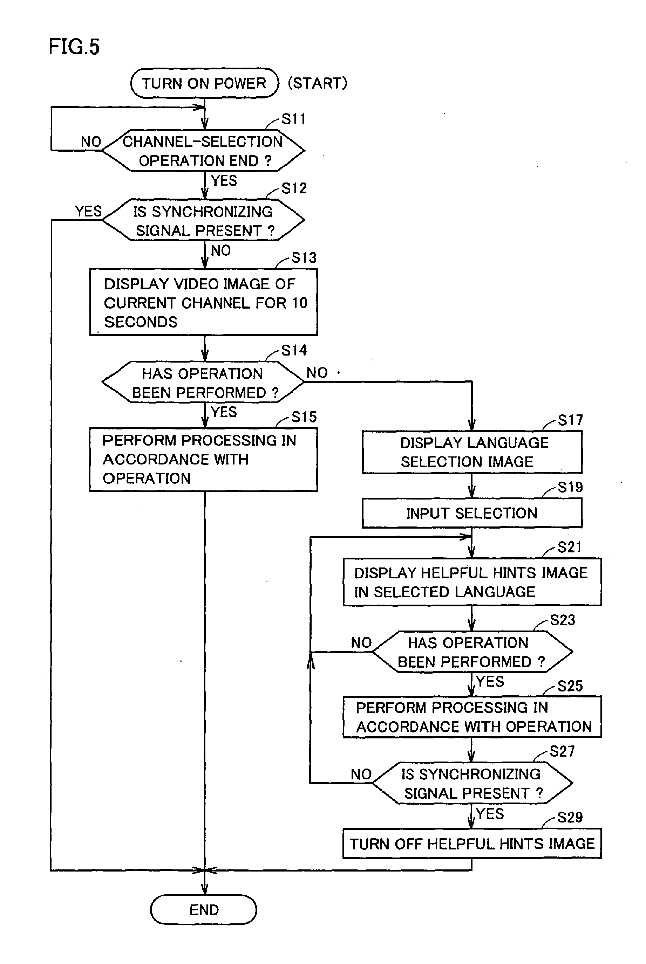

In the following, a procedure for displaying the HELPFUL HINTS image on monitor 90 when the broadcast signal of the selected channel is absent at the time of turn-on of the power of the TV receiver will be described with reference to the flowchart in Fig. 5. As the TV receiver has been turned off in advance, it is assumed that power is not supplied from power supply unit 160 to each unit. In addition, it is also assumed that DVD drive apparatus 170 is not operating and there is no external input of image data to the TV receiver through external input portion 180. The program in accordance with the flowchart shown in Fig. 5 is stored in advance in memory 61. CPU 62 reads the command code of the program from memory 61 and controls each unit in accordance with the read command code. The TV receiver thus performs the processing in Fig. 5.

Initially, the user transmits the instruction signal instructing turn-on of the power to the TV receiver, by pressing the power button on remote controller 50. CPU 62 of microcomputer 60 attains a function as the channel-selection control unit in accordance with the input instruction signal. Namely, CPU 62 controls power supply unit 160 based on the input instruction signal such that power is supplied to each unit in the TV receiver. Then, CPU 62 searches EEPROM 80 based on data CH read from memory 61. As a result of search, tuning voltage data 82 corresponding to data 81 indicating the channel that matches with the channel instructed by data CH is read from EEPROM 80, and read tuning voltage data 82 is output to D/A converter 70.

D/A converter 70 receives input of provided tuning voltage data 82, converts input tuning voltage data 82 to analog tuning voltage signal 12, and outputs tuning voltage signal 12 to tuner 10. Tuner 10 performs the channel-selection operation based on provided tuning voltage signal 12. Therefore, the channel-selection operation for the channel indicated by data CH (the channel that has been selected at the time of most recent turn-off of the power) is performed (step S11). In addition, when the instruction signal instructing turn-on of the power is input from remote controller 50, CPU 62 controls timer 130 and starts a time-counting operation. Moreover, here, CPU 62 outputs data CH read from memory 61 to OSD circuit 140. OSD circuit 140 generates the image signal based on provided data CH and outputs the image signal to monitor 90. Thus, the channel number (identification information) indicated by data CH in memory 61 is displayed on the screen of monitor 90, in a manner superimposed on the video image based on the broadcast signal received through the channel-selection operation. Therefore, the user can check which channel is currently selected, based on the displayed channel number.

At the time point of detection of lapse of a predetermined time since start of display of the channel number on monitor 90 based on the time-count data input from timer 130, CPU 62 may turn off the channel number on monitor 90. Alternatively, when the user operates remote controller 50 to provide the instruction signal instructing turn-off to microcomputer 60, CPU 62 of microcomputer 60 may turn off the channel number on monitor 90. Alternatively, the channel number may be turned off when the HELPFUL HINTS image which will be described later is displayed.

When the channel-selection operation ends, the broadcast signal from tuner 10 is provided to video IC 30 through VIF circuit 20. Video IC 30 detects synchronizing signal 13 from the input broadcast signal, and outputs the signal to microcomputer 60. If synchronizing signal 13 could be detected from the broadcast signal, CPU 62 determines that synchronizing signal 13 is present (YES in step S12). Therefore, a series of processing ends and the video image and voice/sound based on the broadcast signal of the received channel are output from monitor 90 and speaker 100.

On the other hand, if synchronizing signal 13 could not be detected from the broadcast signal, CPU 62 determines that synchronizing signal 13 is absent (NO in step S 12). Therefore, CPU 62 causes monitor 90 to continue output of the image displaying the video image based on the broadcast signal in the currently received channel, during a prescribed period from start of time count in response to turn-on of the power, for example, for 10 seconds, based on the time-count data input from timer 130 (step S 13). In this case, as synchronizing signal 13 is not detected, the video image is not displayed on the screen of monitor 90.

When it is determined that 10 seconds have elapsed since start of time count based on the input time-count data, CPU 62 determines whether or not some kind of instruction signal has been input from the user through remote controller 50 (step S 14). As a result of determination, if some kind of operation instruction is input (YES in step S 14), the processing operation is performed such that the operation in accordance with the input instruction signal is performed (step S 15) and the process ends.

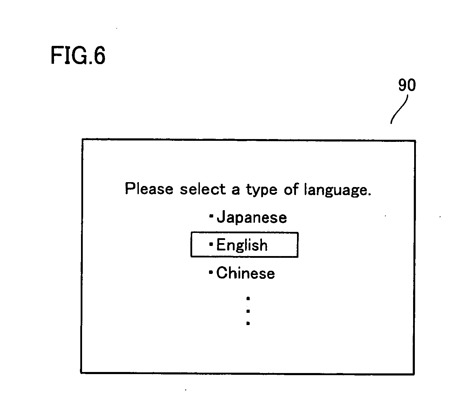

On the other hand, if the user does not operate remote controller 50, CPU 62 determines that no operation instruction is input (NO in step S 14). Then, CPU 62 displays the image for selecting a language in Fig. 6 on monitor 90 (step S 17).

The image data in Fig. 6 is stored in advance in image data memory 120. Microcomputer 60 reads the image data from image data memory 120 and provides the image data to OSD circuit 140. In the image output on monitor 90 by OSD circuit 140 as in the case of the HELPFUL HINTS image described previously, the image in Fig. 6 is displayed in a manner superimposed on the video image based on the broadcast signal output from video IC 130.

The image in Fig. 6 is presented in order to have the user select the language in which the information presented in the HELPFUL HINTS image in Fig. 4 is represented. In Fig. 6, "English" is selected as the language, in correspondence with the HELPFUL HINTS image in Fig. 4. The user can select the language of a desired type by operating the cursor key of remote controller 50 on hand while viewing the image in Fig. 6.

When CPU 62 receives input of the instruction signal for selecting a type of language from remote controller 50 (step S19), CPU 62 attains a function as the display control unit. Namely, CPU 62 searches image data memory 120 based on the input instruction signal. As a result of search, image data 121 corresponding to the selected type of language is read from image data memory 120 and read image data 121 is output to OSD circuit 140. Thus, the HELPFUL HINTS image in Fig. 4 corresponding to English, which is the language of the selected type, is displayed on monitor 90 (step S21). Display of the HELPFUL HINTS image in Fig. 4 can provide the user with hints that help the user solve such a problem that the video image is not displayed on the screen of monitor 90 in spite of turn-on of the power.

When the user sees the HELPFUL HINTS image on monitor 90, the user operates remote controller 50 and outputs the instruction signal to select a desired measure to be taken out of displayed messages of measures. While no operation is made and the instruction signal is not output (NO in step S23), display of the HELPFUL HINTS image in step S21 is continued.

The display of HELPFUL HINTS image may be turned off if it is displayed for a period sufficient for the user to check the contents (for example, 60 seconds), or it may be turned off at the time point of display of the video image on the screen of monitor 90 as a result of detection of synchronizing signal 13.

Meanwhile, if the user's instruction signal for selecting the measure is output from remote controller 50 (YES in step S23), CPU 62 receives the input of the instruction signal and performs the processing operation in accordance with the selected measure instructed by the input instruction signal (step S25). More specifically, when the user operates, for example, the auto preset key of remote controller 50 for example in accordance with "the instruction to perform auto preset" out of the measures displayed on the screen of monitor 90, CPU 62 starts execution of the auto preset operation based on the instruction signal in accordance with this key operation.

After the auto preset operation, CPU 62 determines whether or not the broadcast signal of the channel selected based on data CH can be received, based on whether synchronizing signal 13 is detected or not (step S27). Consequently, if it is determined that the broadcast signal corresponding to the selected channel is absent based on the fact that synchronizing signal 13 is not detected (NO in step S27), the process returns to step S21 and the operation thereafter is similarly performed. Meanwhile, if it is determined that the broadcast signal of the selected channel is present based on detection of synchronizing signal 13 (YES in step S27), CPU 62 controls OSD circuit 140, turns off the HELPFUL HINTS image on monitor 90 (step S29), and ends the processing. Namely, reception of the broadcast signal of the channel indicated by data CH is continued.

Here, if it is determined that the broadcast signal of the channel is present, namely, if it is determined that the video image can be output on the screen of monitor 90, the HELPFUL HINTS image that has been displayed on monitor 90 is turned off. Thus, the user is notified of the fact that the video image in accordance with the broadcast signal of the designated channel can now be displayed.

In addition, when the user saw the HELPFUL HINTS image on monitor 90 in step S21 and checked the connection state of antenna terminal 15 for example in accordance with the "instruction to check connection of the antenna terminal" out of the displayed measures and found that antenna terminal 15 was unplugged, the user connects antenna terminal 15 to the antenna plug. Thus, CPU 62 detects connection of antenna terminal 15 to the antenna plug based on the potential of antenna terminal 15 of the TV receiver (YES in step S23). Namely, CPU 62 detects a state that the broadcast signal can be input from antenna 11. Then, CPU 62 performs the selection operation of the channel designated at that time point (step S25). As a result of the channel-selection operation, if it is determined that the broadcast signal of the designated channel is absent based on detection of synchronizing signal 13 (NO in step S27), the process returns to step S21 and the operation thereafter is performed similarly as described previously. On the other hand, if it is determined that the broadcast signal of the selected channel is present based on detection of synchronizing signal 13 (YES in step S27), the HELPFUL HINTS image on monitor 90 is turned off (step S29) and the process ends. Namely, reception of the broadcast signal of the channel is continued.

Alternatively, it is assumed that the user who saw the HELPFUL HINTS image on monitor 90 performs an operation for example in accordance with the "instruction to refer to the instruction manual" out of the displayed messages of the measures in step S25. Here, for example, if the user operates the channel up/down key on remote controller 50 to perform a channel switching operation (YES in step S23), the channel switching instruction signal is output. Receiving input of the instruction signal, CPU 62 attains a function as the channel re-selection control unit based on the input instruction signal. Namely, CPU 62 controls tuner 10 to perform the channel-selection operation in accordance with the switched channel. Therefore, the broadcast signal of the switched channel is received and the image displaying the video image based on the received broadcast signal is output on monitor 90 (step S25). Consequently, in step S27, it is determined that the broadcast signal of the channel, that is switched based on detection of synchronizing signal 13, is present (YES in S27). Thus, the HELPFUL HINTS image that has been displayed on monitor 90 is turned off (step S29) and the process ends. That is, reception of the broadcast signal of the switched channel is continued.

In the procedure shown in Fig. 5, in step S 13, as display on monitor 90 of the image in accordance with the broadcast signal where synchronizing signal 13 cannot be detected is continued for a prescribed period, the user can check a current channel-selection state (a state where the video image is not output on the screen) by actually viewing the image on monitor 90. Therefore, by displaying the HELPFUL HINTS image thereafter, the user can understand why the HELPFUL HINTS image is displayed, namely, understands that the HELPFUL HINTS image is displayed because the video image is not displayed, and confusion of the user without knowing the reason can be avoided.

In addition, the measure to be taken is displayed and the user performs an operation in accordance with the displayed measure, so that the video image can be displayed on monitor 90. Thus, user's misunderstanding about failure of the TV receiver can be prevented and time and trouble to the user for inquiring of the manufacturer can be saved. Moreover, return of the product to the distributor can also be avoided.

It is noted that, during a period in which the HELPFUL HINTS image is displayed, in order to attract user's attention to the screen, voice/sound may be turned off under the control by microcomputer 60 of audio IC 40.

### (Other Embodiment)

Presentation of a measure provided as HELPFUL HINTS is not limited to presentation using the image, and presentation with voice/sound or with both the image and the voice/sound may be used.

In outputting HELPFUL HINTS with voice/sound, voice/sound data stored in advance in voice/sound memory 110, for reading the measure provided as HELPFUL HINTS adapted to various languages, is utilized. Specifically, when a type of language is selected in step S 17, in step S21, CPU 62 searches voice/sound memory 110 based on the selected type of language, instead of searching image data memory 120. As a result of search, voice/sound data corresponding to the selected type of language is read from voice/sound memory 110, and the read voice/sound data is provided to voice/sound IC 150. As voice/sound IC 150 performs reading processing in accordance with the provided voice/sound data, the message of the measure is output from speaker 100 in the selected language.

In addition, in presenting the measure provided as HELPFUL HINTS, display of the image in Fig. 4 and voice/sound output by reading by means of voice/sound IC 150 may simultaneously be performed. In this case, a color of character string of the message shown on the screen may vary, following reading with voice/sound. The user may select whether voice/sound output and display on the screen should simultaneously be performed, or only display on the screen should be used, or only voice/sound output should be used. The instruction indicating user's selection may be provided to CPU 62 through operation of remote controller 50, or a menu item for selection may be added in the image or the like in Fig. 6 displayed in step S 17 for allowing selection of a desired item from the menu item.

In addition, the user may be allowed to adjust the speed of reading the measure message presented as HELPFUL HINTS by means of voice/sound IC 150 to a desired speed. Specifically, a key for selecting a speed out of a plurality of speed levels is provided in remote controller 50, so that the user operates the selection key and provides a speed switching instruction to microcomputer 60. Alternatively, a menu item for selecting a reading speed may be added in the image as in Fig. 6 displayed in step S17 and a desired item (speed) may be selected from the menu item.

When DVD drive unit 170 attaining a DVD reproduction function or a recording reproduction function is operating and is in a reproduction mode in the TV receiver shown in Fig. 1 (in a mode where the image based on the image data input from DVD drive unit 170 is displayed on monitor 90), microcomputer 60 does not display the HELPFUL HINTS image regardless of presence/absence of the synchronizing signal, when the TV receiver is turned on. In addition, similarly, if an external apparatus such as a personal computer is connected to the TV receiver in a mode where the image based on the image data input from the external apparatus through external input portion 180 is displayed on monitor 90, microcomputer 60 does not display the HELPFUL HINTS image regardless of presence/absence of the synchronizing signal 13. It is noted that a hard disk may be used instead of a DVD.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A broadcast signal reception apparatus, comprising:
a display unit displaying an image based on a supplied signal on a prepared display (90);
a channel-selection operation unit (10) performing a channel-selection operation of a designated channel for a received broadcast signal and outputting a broadcast signal corresponding to the designated channel to said display unit;
a channel-selection control unit controlling, when the power is turned on, said channel-selection operation unit such that said channel-selection operation unit selects a channel, that has been selected at time of most recent turn-off of power, as said designated channel; and
a display control unit displaying an image based on an output from said channel-selection operation unit on said display as a result of operation by said display unit and thereafter displaying an image for instructing a measure on said display, when the broadcast signal of said designated channel is absent in the output from said channel-selection operation unit controlled by said channel-selection control unit.

2. The broadcast signal reception apparatus according to claim 1, wherein in order to provide hints on the measure, said image for instructing said measure includes at least one of an instruction to refer to an instruction manual of said broadcast signal reception apparatus, an instruction to check connection of an antenna terminal (15), and an instruction to perform auto preset.

3. The broadcast signal reception apparatus according to claim 2, further comprising a channel re-selection control unit controlling said channel-selection operation unit to perform channel selection again, when an operation in accordance with the measure instructed in the image for instructing said measure is performed.

4. The broadcast signal reception apparatus according to claim 3, wherein if the broadcast signal of said designated channel is present in the output from said channel-selection operation unit as a result of said channel selection again by said channel-selection operation unit, said display control unit turns off said image for instructing said measure displayed on said display.

5. The broadcast signal reception apparatus according to claim 4, wherein said display control unit determines presence/absence of the broadcast signal of said designated channel based on whether a synchronizing signal of said broadcast signal is detected in the output from said channel-selection operation unit.

6. The broadcast signal reception apparatus according to claim 5, wherein said display control unit displays an instruction of said measure in a language of a designated type.

7. The broadcast signal reception apparatus according to claim 6, further comprising a unit (100) outputting said instruction of the measure with voice/sound, when said image of said measure is displayed as a result of operation by said display control unit.

8. The broadcast signal reception apparatus according to claim 7, wherein said instruction of said measure is output using voice/sound in the language of the designated type.

9. The broadcast signal reception apparatus according to claim 8, further comprising a storage unit (170) storing image data, wherein
if a signal based on said image data read from said storage unit is provided to said display unit, said image of said measure is not displayed.

10. The broadcast signal reception apparatus according to claim 9, further comprising an external input portion (180) for input of externally provided image data, wherein
if a signal based on said image data input through said external input portion is provided to said display unit, said image of said measure is not displayed.

11. The broadcast signal reception apparatus according to claim 1, further comprising a storage unit (170) storing image data, wherein
if a signal based on said image data read from said storage unit is provided to said display unit, said image of said measure is not displayed.

12. The broadcast signal reception apparatus according to claim 1, further comprising an external input portion (180) for input of externally provided image data, wherein
if a signal based on said image data input through said external input portion is provided to said display unit, said image of said measure is not displayed.
